Europäisches Patentamt

European Patent Office

Office européen des brevets

(11) Veröffentlichungsnummer: **0 390 938**
**A1**

# (12) EUROPÄISCHE PATENTANMELDUNG

(21) Anmeldenummer: 89105759.8

(51) Int. Cl.⁵: **B24B 33/06, G05B 19/18**

(22) Anmeldetag: 01.04.89

(43) Veröffentlichungstag der Anmeldung:
**10.10.90 Patentblatt 90/41**

(84) Benannte Vertragsstaaten:
**AT BE CH DE ES FR GB IT LI NL SE**

(71) Anmelder: **Maschinenfabrik Gehring GmbH & Co.**
**Gehringstrasse 28**
**D-7302 Ostfildern 2(DE)**

(72) Erfinder: **Grimm, Hans, Dipl.-Ing.**

**Farnweg 13**
**D-7300 Esslingen 1(DE)**
Erfinder: **Bergen, Karl-Heinz, Dipl.-Ing.**
**Eierwiesenstrasse 13**
**D-7024 Filderstadt 1(DE)**

(74) Vertreter: **Jackisch, Walter, Dipl.-Ing. et al**
**Patentanwalt W. Jackisch & Partner**
**Menzelstrasse 40**
**D-7000 Stuttgart 1(DE)**

(54) Verfahren zum Honen von Bohrungen und Honmaschine zur Durchführung des Verfahrens.

(57) Zum Honen von Bohrungen sind Honmaschinen mit Honwerkzeugen bekannt, deren Arbeitsteile - beispielsweise Honleisten -nach dem Einfahren des Werkzeuges in die Bohrung in Richtung auf die Bohrungswandung zugestellt werden. Die hierfür vorgesehene Zustellvorrichtung kann mechanisch oder hydraulisch ausgebildet sein und betätigt werden.

Nach dem erfindungsgemäßen Verfahren wird während der Bearbeitung die Druckkraft gesteuert, mit der die Arbeitsteile (15) des Honwerkzeuges (1) an die Bohrungswandung (4) angedrückt werden. Dadurch kann die Flächenpressung der Arbeitsteile (15) unabhängig von der Oberflächengestaltung der Bohrungswandung (4) konstant gehalten oder gezielt variiert werden. Die Honmaschine hat zu diesem Zweck eine Zustellvorrichtung (16) mit elektronischem Steuergerät (30) für die vorzugebende Druckkraft.

Fig. 1

EP 0 390 938 A1

## Verfahren zum Honen von Bohrungen und Honmaschine zur Durchführung des Verfahrens

Die Erfindung betrifft ein Verfahren zum Honen von Bohrungen nach dem Oberbegriff des Patentanspruches 1 und eine Honmaschine zur Durchführung des Verfahrens nach dem Oberbegriff des Patentanspruches 11.

Beim Honen von Bohrungen werden die üblicherweise als Honleisten ausgebildeten Arbeitsteile des axial oszillierend und drehend angetriebenen Honwerkzeuges mit Druckkraft an der Bohrungswandung anliegend gehalten. Hierfür ist bei den üblichen Honmaschinen eine Zustellvorrichtung vorgesehen, welche die Honleisten nach dem Einfahren des Werkzeuges in die Bohrung radial in Richtung auf die Bohrungswandung bewegt und während der Bearbeitung den Anpreßdruck erzeugt. Die Zustellvorrichtung kann hydraulisch oder mechanisch betätigt werden. Bei den hydraulischen Zustellsystemen wird eine konstante Zustellkraft erzeugt. Mit den mechanischen Zustellsystemen wird ein bestimmter Zustellweg vorgegeben, wobei sich eine Zustellkraft einstellt, die von dem mechanischen System abhängig ist und bei den bekannten Verfahren für die Steuerung der Bearbeitung außer Betracht gelassen wird.

Die Zustellkraft konzentriert sich auf die jeweilige Anlagefläche der Honsteine an der Bohrungswandung. Verkleinert sich diese Anlagefläche während der Bearbeitung, so steigt die Flächenpressung der Honleisten an, da die Steifigkeit des Zustellsystemes ein Zurückweichen der Honleisten nicht erlaubt. Eine Verringerung der Anlagefläche und damit eine erhöhte Flächenpressung entsteht beispielsweise im Bereich von Ausnehmungen und Durchbrüchen der Bohrungswandung und auch an den Bohrungsenden, da die Honleisten dort mit einem Teilstück ihrer Länge aus der Bohrung ausfahren, ehe sie durch Hubumkehr des Honwerkzeuges wieder eingefahren werden. Auch ist bei Sacklochbohrungen und stufenförmig abgesetzten Bohrungswandungen im Bereich der inneren Bohrungsbegrenzung eine Verengung der Bohrung vorhanden, was ebenfalls zu einer erhöhten Flächenpressung führt. Die während der Bearbeitung auftretenden Unterschiede in der Flächenpressung vermindern die Qualität der bearbeiteten Oberfläche und führen zu Formungenauigkeiten des Werkstückes. Außerdem ergibt sich dabei ein ungleichmäßiger und an bestimmten Stellen besonders starker Verschleiß der Honleisten, die darum häufig abgerichtet werden müssen.

Der Erfindung liegt die Aufgabe zugrunde, das Honverfahren und die Honmaschine der bekannten Art derart weiterzubilden, daß die von der Flächenpressung des Honwerkzeuges abhängige Güte und Genauigkeit der bearbeiteten Bohrungswandung verbessert werden. Auch soll ein ungleichmäßiger Verschleiß der Arbeitsteile des Honwerkzeuges auf ein Mindestmaß reduziert werden.

Die Aufgabe wird gemäß der Erfindung bei dem bekannten Honverfahren mit dem kennzeichnenden Merkmal des Patentanspruches 1 und bei der bekannten Honmaschine mit den kennzeichnenden Merkmalen des Patentanspruches 11 gelöst.

Die erfindungsgemäße, während der Bearbeitung ausgeführte Steuerung der Druckkraft, mit der die Arbeitsteile des Honwerkzeuges an der Bohrungswandung gehalten werden, ermöglicht eine Anpassung der Flächenpressung dieser Arbeitsteile an die jeweiligen Gegebenheiten der zu bearbeitenden Bohrung. Dabei kann die Flächenpressung konstant gehalten werden, so daß sich über die gesamte Bohrungslänge und unabhängig von etwaigen Unterbrechungen in der Bohrungswandung ein gleichmäßiger Werkstoffabtrag ergibt und damit eine hohe Formgenauigkeit der fertig bearbeiteten Bohrung gewährleistet ist. Dabei ergibt sich auch eine sehr gleichmäßige Abnutzung der Arbeitsteile, also beispielsweise der Honleisten oder Honsteine, die dann weniger häufig abgerichtet werden müssen. Die Größe der Flächenpressung kann aber auch während der Bearbeitung gezielt variiert werden, um ein bestimmtes Arbeitsergebnis zu erreichen.

Das an der erfindungsgemäßen Honmaschine vorgesehene elektronische Zustellsteuergerät für die Zustellvorrichtung der Honwerkzeug-Arbeitsteile ermöglicht die automatische Steuerung der Druckkraft, mit der die Arbeitsteile während der Hub- und Drehbewegung des Honwerkzeuges an die Bohrungswandung angepreßt werden. Dabei kann die Druckkraft auf einen vorzugebenden Sollwert geregelt oder auch nach Maßgabe eines eingegebenen Programmes gesteuert werden. Damit wird die Honbearbeitung auch hinsichtlich der erfindungsgemäß zu steuernden Druckkraft automatisiert, so daß die Honmaschine besonders wirtschaftlich arbeitet.

Weitere Merkmale der Erfindung ergeben sich aus den Unteransprüchen und der folgenden Beschreibung, in der ein Ausführungsbeispiel anhand der Zeichnungen näher erläutert wird. Es zeigen

Fig. 1 die für die Erfindung wesentlichen Teile der Honmaschine in schematischer Darstellung,

Fig. 2 eine zu bearbeitende Bohrungswandung in Abwicklung mit Unterteilung durch Höhenlinien,

Fig. 3 den Verlauf der Druckkraft über die Länge der Bohrung während eines Arbeitshubes des Honwerkzeuges beim Bearbeiten der Bohrungswandung nach Fig. 2.

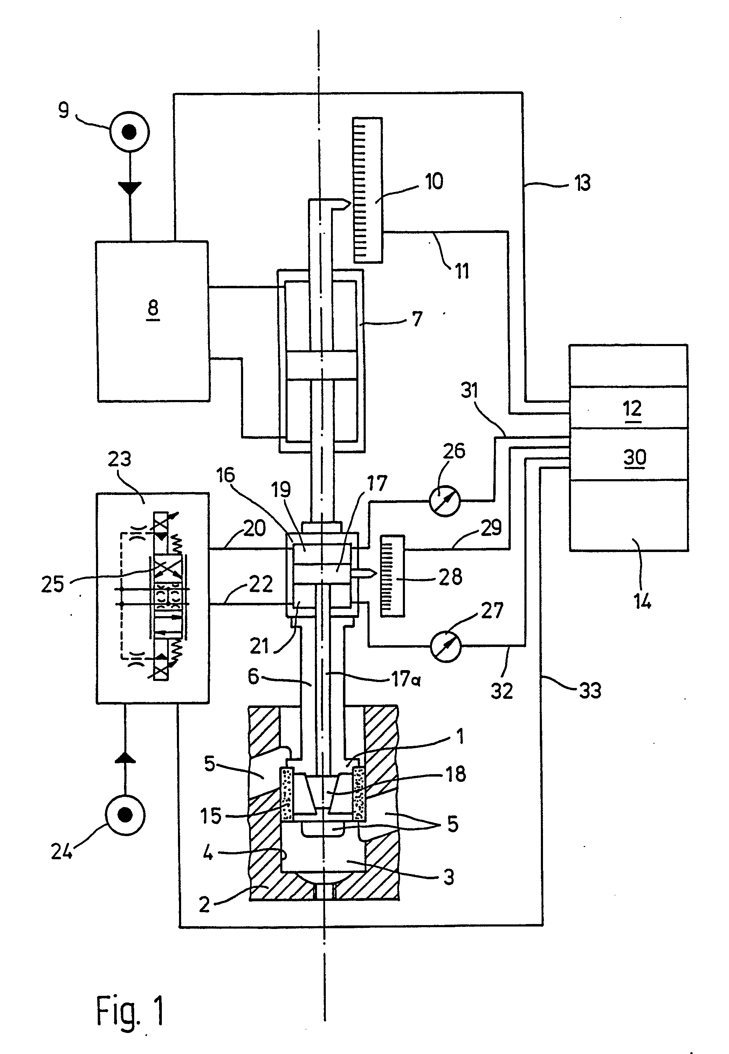

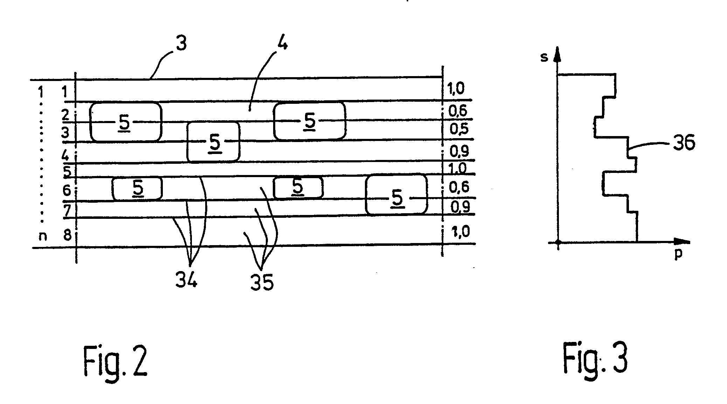

Fig. 1 zeigt ein Honwerkzeug 1 der im übrigen nicht näher dargestellten, programmgesteuerten Honmaschine innerhalb der Bohrung 3 eines Werkstückes 2, im vorliegenden Fall eines Zweitaktzylinders mit zylindrischer Bohrung. Die Bohrungswandung 4 ist durch mehrere Kanäle 5 unterbrochen, die in die Bohrung 3, also in den Innenraum des Zylinders 2 münden, wie aus Fig. 1 und auch aus der Abwicklung der Bohrungswandung nach Fig. 2 ersichtlich ist. Das Honwerkzeug 1 ist an einer Honspindel 6 angebracht, die von einem Hubantrieb, im Ausführungsbeispiel von einem hydraulischen Hubzylinder 7 in Richtung ihrer Längsachse aufwärts und abwärts bewegt wird. In die beiden Kammern des Hubzylinders 7 münden die Druckmittelleitungen einer hydraulischen Steuereinheit 8, die an eine Druckmittelquelle 9 angeschlossen ist. Die Honspindel wird außerdem von einem - nicht dargestellten - Drehantrieb in Rotation versetzt. Für die Hubumsteuerung ist ein Weggeber 10 vorgesehen, der die Höhenlage der Honspindel 6 ermittelt und digitale oder analoge Signale abgibt, die über eine elektrische Leitung 11 einem Hubsteuergerät 12 zugeführt werden. Dadurch ist die jeweilige Höhenlage der Honspindel 6 und damit des Honwerkzeuges 1 innerhalb des Hubweges zu ermitteln. Das Hubsteuergerät 12 ist Bestandteil einer Programmsteuer-Einheit 14 der numerisch gesteuerten Honmaschine (NC-Steuerung). In die Programmsteuer-Einheit 14 ist der vorgegebene Hubweg eingespeichert, so daß beim Erreichen bestimmter, vom Weggeber 10 ermittelter Werte das Hubsteuergerät 12 über eine Leitung 13 ein Signal an die Steuereinheit 8 zur Umsteuerung des Hubes abgibt. Diese Art der Hubumsteuerung ist an sich bekannt.

Das Honwerkzeug 1 hat als Arbeitsteile Honleisten 15, die radial zur Achse der Honspindel 6 verstellt werden können. Hierfür ist ein Zustellkonus 18 vorgesehen, der an Schrägflächen von Trägern der Honleisten 15 verschiebbar geführt ist und mittels einer Zustellvorrichtung 16 in Achsrichtung der Honspindel 6 verstellbar ist. Die Zustellvorrichtung besteht aus einer Kolben-Zylinder-Einheit mit im Zylinder befindlichem Kolben 17, an dessen Kolbenstange 17a der Zustellkonus 18 befestigt ist. Die Kolbenstange 17a liegt zentral in der Honspindel 6. In die beiderseits des Kolbens 17 vorhandenen Druckkammern 19 und 21 mündet jeweils eine von zwei hydraulischen Leitungen 20 und 22, die über eine hydraulische Steuereinheit 23 an eine Druckmittelquelle 24 angeschlossen sind. Die Steuereinheit 23 enthält ein Regelventil 25.

An die beiden Druckkammern 19 und 21 der Zustellvorrichtung 16 ist außerdem je ein Drucksensor 26 bzw. 27 über eine Meßleitung angeschlossen. Von dem Drucksensor 26 führt eine elektrische Leitung 31 an einen Meßeingang eines elektronischen Zustellsteuergerätes 30, das Bestandteil der Programmsteuer-Einheit 14 ist. An einen zweiten Meßeingang des Zustellsteuergerätes 30 führt eine elektrische Leitung 32, die an den Drucksensor 27 angeschlossen ist. Der hydraulischen Zustellvorrichtung 16 ist außerdem eine Meßeinrichtung 28 zugeordnet, mit der die Lage des Kolbens 17 im Zylinder der Zustellvorrichtung ermittelt wird. Die Meßeinrichtung enthält zu diesem Zweck einen Inkremental-Weggeber, der also die Kolbenbewegung in einzelnen Schritten mißt, und dessen Meßwerte innerhalb der Meßeinrichtung 28 in digitale Signale umgesetzt werden, die über eine elektrische Leitung 29 an einen weiteren Meßeingang des Zustellsteuergerätes 30 gegeben werden. Mittels der Meßeinrichtung 28 ist über das Zustellsteuergerät 30 eine Maßsteuerung zur Bearbeitung der Bohrung 3 möglich. Das Zustellsteuergerät 30 ist über eine elektrische Steuerleitung 33 an das beispielsweise elektromagnetisch betätigte Regelventil 25 der hydraulischen Steuereinheit 23 angeschlossen.

Die Programmsteuer-Einheit 14 enthält einen Rechner und steuert und überwacht den Ablauf sämtlicher Funktionen der Honmaschine. In dieser Steuereinheit 14 sind alle Daten gespeichert, die für die räumliche Zuordnung und den Bewegungsablauf des Honwerkzeuges zu dem zu bearbeitenden Werkstück 2 charakteristisch sind. Außerdem werden in der Programmsteuer-Einheit 14 Daten gespeichert, mit denen die Gestaltung der Bohrungswandung erfaßt wird, die sich aus der Abwicklung der Wandungsfläche gemäß Fig. 2 ergibt. Im Ausführungsbeispiel hat das Werkstück 2, also der zu honende Zweitaktzylinder, Überströmkanäle sowie Einlaß- und Auslaßkanäle 5, so daß die zu honende Bohrungswandung 4 an mehreren Stellen unterbrochen ist, wie Fig. 2 zeigt.

Die so dargestellte Abwicklung der Bohrungsfläche wird zur Verwendung als Bezugssystem durch parallele, zur Bohrungsachse senkrechte Trennlinien 34 in n Höhenabschnitte 35 unterteilt; im Ausführungsbeispiel ist n = 8. Ausgehend von der Wertzahl 1 für nicht durch Kanalmündungen unterbrochene Höhenabschnitte erhalten alle Höhenabschnittes 35 eine Wertzahl, die einem Bruchteil des Wertes 1 entsprechend der jeweils vorhandenen Fläche des Hohenabschnittes entspricht; die im Ausführungsbeispiel gegebenen Werte sind an den Trennlinien 34 in Fig. 2 rechts eingetragen. So beträgt beispielsweise die nach Abzug der Unterbrechung verbliebene Restfläche im dritten Höhenabschnitt = 0,5, was bedeutet, daß innerhalb dieses Höhenabschnittes die Oberfläche der Bohrungswandung 4 um 50 % reduziert ist. Die auf diese Weise festgestellten Werte für den jeweiligen Oberflächenanteil werden unter Zuordnung zu den entsprechenden Hohenabschnitten in der Programmsteuer-Einheit 14 gespeichert.

Während des Honens wird über ein Rechenprogramm der Programmsteuereinheit 14 die Größe der jeweils bearbeiteten Fläche der Bohrungswandung 4 anhand der Daten errechnet, die für das Werkzeug und das Werkstück charakteristisch sind sowie die vom Weggeber 10 gemessene Hublage des Werkzeuges kennzeichnen, und die in der Programmsteuer-Einheit 14 gespeichert sind. Das Rechenergebnis wird unmittelbar zur Steuerung der Druckkraft ausgewertet, mit der die Honleisten 15 gegen die Bohrungswandung 14 gedrückt werden. Die Druck kraft kann dabei so gesteuert werden, daß die Flächenpressung der Honleisten 15 konstant bleibt. Für die Druckkraftsteuerung wird im Zustellsteuergerät 30 anhand des Rechenergebnisses der Sollwert des Druckes ermittelt, den der Kolben 17 über die Kolbenstange 17a als Zustelldruck auf den Zustellkonus 18 ausüben muß, um die vorgegebene radiale Druckkraft zu erzeugen. Dieser Sollwert wird im Zustellsteuergerät 30 mit dem Istwert verglichen, der über die beiden Drucksensoren 26 und 27 als Differenzdruck zwischen den beiden Druckkammern 19 und 21 ermittelt wird. Bei Abweichungen des Istwertes vom Sollwert liefert das Zustellsteuergerät 30 ein Signal über die Steuerleitung 33 an das Regelventil 25 der hydraulischen Steuereinheit 23, die dann über die hydraulischen Leitungen 20 und 22 den Druck im Zylinder der Zustellvorrichtung 16 auf den Sollwert nachregelt.

In Fig. 3 sind die Werte des geregelten Differenzdruckes der Kammern 19 und 21 für den Weg S eines Arbeitshubes über dem Druck P aufgetragen, wobei sich ein stufenförmiger Druckverlauf 36 entsprechend den Werten für die Höhenabschnitte 35 (Fig. 2) ergibt. Die für die Abwicklung der Bohrungswandung charakteristischen und gespeicherten Daten führen also zu Änderungen des Druckverlaufes 36, wobei jeder Höhenabschnitt 35 entsprechend dem Flächenanteil der Bohrungswandung den Zustelldruck beeinflußt. Bei einem geringen Flächenanteil, beispielsweise im zweiten und dritten Höhenabschnitt 35, ergibt sich eine kleinere Berührungsfläche der Honleisten mit der Bohrungswandung, und dementsprechend wird über die Steuerung der Zustelldruck und damit der Anpreßdruck vermindert, so daß die Flächenpressung konstant bleibt. Dieselbe Wirkung ergibt sich an den Bohrungsenden beim Überlauf der Honleisten, die also dort zum Teil aus der Bohrung ausfah ren, da sich auch dann die Größe der Berührungsfläche zwischen Honleisten und Bohrungswandung vermindert.

Anstelle einer Regelung auf konstante Flächenpressung kann es für bestimmte Bearbeitungsfälle zweckmäßig sein, die Flächenpressung gezielt zu variieren. Enthält beispielsweise die Bohrungswandung unterschiedlich harte Werkstoffanteile, oder sind Engstellen der Bohrungen vorhanden, so kann die Flächenpressung während eines Arbeitshubes in bestimmten Hublagen erhöht oder verringert werden, um die Bearbeitung diesen Gegebenheiten anzupassen. Ebenso kann durch Programmsteuerung eine Veränderung der Flächenpressung zwecks Erzielung einer bestimmten Bohrungsform eingegeben werden.

Die Steuerung der Druckkraft und damit der Flächenpressung kann auch für eine Maßsteuerung verwendet werden. Hierfür ist die Meßeinrichtung 28 vorgesehen, mit der die Lage des Kolbens 17 im Zylinder der Zustellvorrichtung 16 ermittelt und als Signal dem Zustellsteuergerät 30 eingegeben wird. Da nämlich die Lage des Kolbens 17 zugleich ein Maß für die Spreizstellung der Honleisten 15 und damit auch ein Maß für die Weite der Bohrung 3 darstellt, kann auf diese Weise der jeweils erreichte Bohrungsdurchmesser ermittelt und das entsprechende Signal dazu verwendet werden, die Bearbeitung nach Erreichen des Sollmaßes zu beenden. Ebenso kann diese Maßsteuerung zur Erzielung einer höheren Maßgenauigkeit und Oberflächengüte der Bohrung verwendet werden. Wenn beispielsweise die Meßeinrichtung 28 dem Zustellsteuergerät 30 anzeigt, daß ein Bohrungsmaß erreicht ist, das nur noch geringfügig unter dem vorgegebenen Fertigmaß liegt, so kann die Druckkraft und damit die Flächenpressung für die Fertigbearbeitung verringert werden, was sich auf die Qualität des Werkstückes hinsichtlich Maßgenauigkeit und Oberflächengüte günstig auswirkt.

## Ansprüche

1. Verfahren zum Honen von Bohrungen, insbesondere von Bohrungen mit Unterbrechungen in der zu honenden Bohrungswandung, mittels eines axial und um seine Achse drehend bewegten Honwerkzeuges, dessen Arbeitsteile, beispielsweise Honleisten, während der Bearbeitung unter Druckkraft an der Bohrungswandung anliegend gehalten werden, dadurch gekennzeichnet, daß die Druckkraft während der Bearbeitung gesteuert wird.

2. Verfahren nach Anspruch 1, dadurch gekennzeichnet, daß die Druckkraft in Abhängigkeit von der Größe der Berührungsfläche zwischen den Arbeitsteilen des Honwerkzeuges und der Bohrungswandung gesteuert wird.

3. Verfahren nach Anspruch 2, dadurch gekennzeichnet, daß die Druckkraft nach Maßgabe einer konstanten Flächenpressung der Arbeitsteile des Honwerkzeuges gesteuert wird.

4. Verfahren nach Anspruch 2, dadurch gekennzeichnet, daß die Druckkraft nach Maßgabe einer einstellbar variablen Flächenpressung der Arbeitsteile des Honwerkzeuges gesteuert wird.

5. Verfahren nach einem der Ansprüche 1 bis 4,
dadurch gekennzeichnet, daß die Druckkraft elektronisch programmgesteuert wird.

6. Verfahren nach einem der Ansprüche 1 bis 5,
dadurch gekennzeichnet, daß die Druckkraft in Abhängigkeit von während der Bearbeitung gemessenen Bohrungsmaßen und/oder gemessenen Werten der Flächenpressung der Arbeitsteile des Honwerkzeuges meßgesteuert wird.

7. Verfahren nach einem der Ansprüche 1 bis 6,
dadurch gekennzeichnet, daß zur Steuerung der Druckkraft geeignete geometrische und/oder gemessene Daten der Bohrung und/oder des Honwerkzeuges und/oder Maschinendaten elektronisch gespeichert werden.

8. Verfahren nach Anspruch 7,
dadurch gekennzeichnet, daß die Größe der Berührungsfläche zwischen den Arbeitsteilen des Honwerkzeuges und der Bohrungswandung aufgrund der Geometrie des Werkstückes und des Honwerkzeuges sowie des maschinell vorgegebenen Bewegungsablaufes des Honwerkzeuges in einem elektronischen Rechner ermittelt wird, dem diese Einflußgrößen eingegeben werden.

9 Verfahren nach Anspruch 7 oder 8,
dadurch gekennzeichnet, daß die Abwicklung der Bohrungs wandung als Bezugssystem dargestellt und durch vorzugsweise parallele Trennlinien (34) in eine Anzahl von Höhenabschnitten (35) unterteilt wird, und daß der Flächenanteil in jedem Hohenabschnitt rechnerisch ermittelt und gespeichert wird.

10. Verfahren nach einem der Ansprüche 6 bis 9,
dadurch gekennzeichnet, daß aus gespeicherten Daten der vorgegebenen Maße und Bewegungsabläufe Sollwerte der Druckkraft errechnet und mit Istwerten verglichen werden, die während der Bearbeitung durch direkte oder indirekte Messung der Größe der Berührungsfläche zwischen den Arbeitsteilen des Honwerkzeuges und der Bohrungswandung ermittelt werden, und daß die Druckkraft auf die vorgegebenen Sollwerte geregelt wird.

11. Honmaschine zur Durchführung des Verfahrens nach einem der Ansprüche 1 bis 10,
mit einem Honwerkzeug, dem für die axial oszillierende Bewegung ein Antrieb mit Hubweg-Geber zur Hubumkehrsteuerung, ein Drehantrieb und eine Zustellvorrichtung zugeordnet sind, mit der die Arbeitsteile des Honwerkzeuges in Richtung auf die Bohrungswandung und zurück bewegbar sind,
dadurch gekennzeichnet, daß die Zustellvorrichtung (16) an ein elektronisches Zustellsteuergerät (30) angeschlossen ist, das die Zustellung nach Maßgabe der vorzugebenden Druckkraft für die Arbeitsteile (15) des Honwerkzeuges (1) steuert.

12. Honmaschine nach Anspruch 11,
dadurch gekennzeichnet, daß die Zustellvorrichtung (16) aus einer hydraulischen Kolben-Zylinder-Einheit besteht, die mit dem Zustellsteuergerät (30) über eine hydraulische Steuereinheit (23) verbunden ist, welche die Druckbeaufschlagung des Kolbens (17) der Zustellvorrichtung (16) in Abhängigkeit von Steuerbefehlen des Zustellsteuergerätes (30), vorzugsweise mittels eines Regelventils (25), während der Hub- und Drehbewegung des Honwerkzeuges (1) steuert.

13. Honmaschine nach Anspruch 12,
dadurch gekennzeichnet, daß an die beiden Kammern (19 und 21) beiderseits des Kolbens (17) der Kolben-Zylinder-Einheit (16) je einer von zwei Drucksensoren (26 und 27) angeschlossen ist, die mit Meßeingängen des Zustellsteuergerätes (30) verbunden sind, das bei Abweichungen der Meßwerte von eingegebenen Sollwerten Steuerbefehle zur Druckregelung an die hydraulische Steuereinheit (23) liefert.

14. Honmaschine nach Anspruch 12 oder 13,
dadurch gekennzeichnet, daß dem Kolben (17) der Zustellvorrichtung (16) zur Ermittlung seiner Position eine Meßeinrichtung (28) zugeordnet ist, die an einen Meßeingang des Zustellsteuergerätes (30) angeschlossen ist.

15. Honmaschine nach einem der Ansprüche 11 bis 14,
dadurch gekennzeichnet, daß das Zustellsteuergerät (30) Bestandteil einer Programmsteuer-Einheit (14) ist, die einen Rechner enthält, und an die der Hubweg-Geber (10) angeschlossen ist, aus dessen Meßwerten sowie eingespei cherten Daten des Werkstückes (2) und des Honwerkzeuges (1) der Rechner die jeweilige Große der Berührungsfläche zwischen den Arbeitsteilen (15) des Honwerkzeuges (1) und der Bohrungswandung (4) ermittelt.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 620 958 (SUNNEN PRODUCTS CO.) <br> * Zusammenfassung * <br> --- | 1-5,11 | B 24 B 33/06 <br> G 05 B 19/18 |
| Y | US-A-3 451 175 (J. SUNNEN et al.) <br> * Zusammenfassung * <br> --- | 1-5,11 | |
| A | FR-A-2 094 234 (S.A. AUTOMOBILE CITROEN) <br> * Seite 6, Zeilen 30-41; Anspruch 1 * <br> --- | 1-3,11-14 | |
| A | DE-A-3 042 755 (P. NAGEL) <br> * Ansprüche * <br> --- | 11-15 | |
| A | EP-A-0 183 021 (MASCHINENFABRIK GEHRING) <br> * Zusammenfassung * <br> ----- | 1,11 | |

**RECHERCHIERTE SACHGEBIETE (Int. Cl.5)**

B 24 B
B 23 Q
G 05 B

Der vorliegende Recherchenbericht wurde für alle Patentansprüche erstellt

| Recherchenort | Abschlußdatum der Recherche | Prüfer |
|---|---|---|
| DEN HAAG | 12-12-1989 | ESCHBACH D.P.M. |

EPO FORM 1503 03.82 (P0403)